# EUROPÄISCHE PATENTSCHRIFT

(11) **EP 1 083 569 B1**
(45) Veröffentlichungstag und Bekanntmachung des Hinweises auf die Patenterteilung: **08.11.2006**
(21) Anmeldenummer: 99117491.3
(22) Anmeldetag: 11.09.1999
(51) Int. Cl.: G11B 33/04

(54) **Aufbewahrungskassette für mindestens eine digitale Informationen speichernde Informationsplatte**
Storage container for at least one digital disc-like information carrier
Boîtier pour stocker au moins un disque qui contient des informations numériques

(43) Veröffentlichungstag der Anmeldung: 14.03.2001
(73) Patentinhaber: CARTONNERIES DE THULIN S.A., B-7350 Thulin (BE)
(72) Erfinder: Lammerant, Henri, B-7350 Thulin (BE); Lammerant, Filip, B-7350 Thulin (BE)
(74) Vertreter: Christophersen & Partner

(56) Entgegenhaltungen:
- FR-A- 2 238 211
- US-A- 5 551 560
- US-A- 5 899 327

## Beschreibung

Die Erfindung betrifft eine Aufbewahrungskassette für mindestens eine, digitale Informationen speichernde Informationsplatte, insbesondere Compact Disc (CD) oder Digital Versatile Disc (DVD) bestehend aus einem die mit einer zentralen Öffnung versehene Informationsplatte aufnehmenden und hierzu mit Zentriermitteln versehenen Basisteil sowie einem bei geschlossener Aufbewahrungskassette das Basisteil einschließlich der darin aufgenommenen Informationsplatte verschließenden Deckel, der über ein Scharnier gelenkig mit dem Basisteil verbunden ist.

Zur Aufnahme von Compact Discs sind auf dem Markt eine Vielzahl von Aufbewahrungskassetten erhältlich. Gemeinsam ist den Kassetten, daß die Compact Discs auf einem aus Kunststoff bestehenden Träger befestigt werden, der zur Fixierung der Compact Disc in seiner Mitte mit einer Mehrzahl kreisförmig angeordneter Klemmelemente versehen ist. Die Klemmelemente greifen in ein mittig in der Informationsplatte angeordnetes Loch ein, umgreifen auch etwas den oberen Rand des Loches und halten auf diese Weise die Informationsplatte horizontal an dem Träger fest. Hierzu sind die Klemmelemente federnd ausgebildet, so daß sie eine von innen nach außen gerichtete kräftige Haltekraft auf den das zentrale Loch der Informationsplatte umgebenden Rand ausüben und auf diese Weise die Compact Disc festhalten.

Diese Befestigungstechnik hat sich für die weit verbreiteten Compact Discs seit längerer Zeit bewährt, und wird auch bei den erst in jüngster Zeit auf den Markt gekommenen Digital Versatile Disc (DVD) angewandt. Die Digital Versatile Disc setzt sich aus zwei Scheiben zusammen, die fest miteinander verklebt sind. Infolge dieses zweischichtigen Aufbaus kann es bei häufigem Einsetzen und wieder Herausnehmen aus den bekannten Aufbewahrungskassetten zu Beschädigungen an der Platte kommen, und zwar vor allem an jenen Stellen, an denen die beiden Plattenhälften aneinanderstoßen. Aus produktionstechnischen Gründen bei der Herstellung der Informationsplatten sind diese Stoßflächen nur in den seltensten Fällen glattflächig, meistens sind dort kleine Unebenheiten oder Grate vorhanden, die beim Herausnehmen aus der Kassette an den kräftigen Klemmelementen der Kassette hängenbleiben können, wodurch eine hohe mechanische Belastung der Informationsplatte eintritt.

Aus der US 5, 551, 560 ist eine Aufbewahrungskassette bekannt, bei der eine mit Anschrägungen versehene Rippe in das zentrale Loch der Compact Disc eingreift. Diese Rippe übt keine Klemmkraft auf das zentrale Loch der Compact Disc aus, weshalb zusätzliche Halteelemente im Randbereich der Compact Disc vorgesehen sind, um diese in ihrer Position innerhalb der Aufbewahrungskassette zu sichern. Auf der einen Seite der Aufbewahrungskassette ist an dem den Deckel mit dem Basisteil verbindenden doppelten Scharnier ein Halteelement vorgesehen, das sich beim Schließen des Deckels von oben her auf die Compact Disc absenkt. Auf der dem Scharnier abgewandten Seite der Aufbewahrungskassette ist am Basisteil ein Halteelement mit einem die Oberseite der eingelegten Compact Disc nach Art eines Hinterschnitts überragenden Vorsprung vorgesehen. Als nachteilig, weil vergleichsweise aufwendig und für den Benutzer ungewohnt, hat sich das Einlegen bzw. die Entnahme der Compact Disc erwiesen, da es hierbei erforderlich ist, die Compact Disc gegenüber dem Basisteil der Aufbewahrungskassette zu verschwenken, um auf diese Weise beim Einlegen den Eingriff mit dem Vorsprung herzustellen bzw. diesen bei Entnahme der Disc wieder zu lösen.

Der Erfindung liegt die **Aufgabe** zugrunde, eine Informationsplatten besonders schonend lagernde Aufbewahrungskassette zu schaffen, aus der sich die Informationsplatten auch für einen ungeübten Benutzer einfach und unter Vermeidung einer zu starken mechanischen Beanspruchung der empfindlichen Informationsplatte entnehmen lassen.

Zur **Lösung** wird bei einer Aufbewahrungskassette der eingangs genannten Art vorgeschlagen, daß der Deckel an der dem Scharnier abgewandten Seite mit mindestens einem sich parallel zu der Informationsplatte erstreckenden Halteelement versehen ist, welches sich durch Schließen des Deckels bis in die durch die Oberseite der Informationsplatte definierte Ebene absenkt und hierbei vom Außenrand der Informationsplatte her bis über die Informationsplatte ragt.

Mit dem Schließen des Deckels wird also der Bewegungsspielraum der Informationsplatte in dem Basisteil auf nahezu Null abgesenkt, wobei das der Informationsplatte dann noch verbleibende geringe vertikale Spiel durch den Boden des Basisteils einerseits sowie das Halteelement andererseits eindeutig begrenzt wird. Erreicht wird auf diese Weise nicht nur eine besonders schonende Lagerung der Informationsplatte, sondern es wird darüber hinaus auch der Vorteil erzielt, daß sich die Informationsplatte auch für einen ungeübten Benutzer einfach und unter Vermeidung einer zu starken mechanischen Beanspruchung der Ränder der Informationsplatte entnehmen läßt.

Desweiteren sind Fehlbedienungen ausgeschlossen, wie sie einem ungeübten Benutzer bei solchen bekannten Aufbewahrungskassetten passieren können, bei denen auf die in der Mitte des Basisteils angeordneten Zentriermittel zu deren Entriegelung zunächst ein Finger- oder Daumendruck ausgeübt werden muß. Beachtet der Benutzer dies nicht, kann es zu einem Zerbrechen der empfindlichen Informationsplatte kommen. Eine solche Aufbewahrungskassette ist z. B. aus der britischen Patentschrift GB 2 291 640 bekannt.

Um die Informationsplatte innerhalb des Aufnahmeraumes an einem Kippen oder Verkanten zu hindern, ist eine weitere Ausgestaltung gekennzeichnet durch ein dem Halteelement in Bezug auf die Mittelachse der Informationsplatte gegenüberliegendes weiteres Halteelement, welches sich durch Schließen des Deckels ebenfalls bis in die durch die Oberseite der Informationsplatte definierte Ebene absenkt und hierbei bis über die Informationsplatte ragt.

Desweiteren wird mit der Erfindung vorgeschlagen, daß das Halteelement bzw. das weitere Halteelement ausschließlich im Randbereich der Informationsplatte auf dieser aufliegt und nur über einen Kreisabschnitt des Randes der Informationsplatte ragt. Hierdurch wird eine schonende, nur auf das notwendige Maß reduzierte Abstützung von oben erreicht.

Die seitliche Zentrierung der Compact Disc im Basisteil erfolgt vorzugsweise über einen in das zentrale Loch der Compact Disc eingreifenden Zapfen, der zusätzlich auch als Aufsetzhilfe dienen kann.

Bevorzugt wird ferner eine Ausgestaltung, welche gekennzeichnet ist durch um den Außenrand der Informationsplatte herum angeordnete Umfangsflächen, die dem Außenrand der Compact Disc mit geringem Abstand radial gegenüberliegen, und deren Krümmung im wesentlichen gleich der Kreiskrümmung des Außenrandes ist, wobei sich das Halteelement bzw. das weitere Halteelement in abgesenktem Zustand auf der oberen Kante zumindest einer dieser Umfangsflächen des Basisteils abstützt, und die Unterseite des Halteelements zusammen mit der Umfangsfläche eine rechtwinklige Ecke bildet. Indem sich das an dem Deckel angeformte Halteelement auf diese Weise unmittelbar auf dem Basisteil abstützt, besteht keine Gefahr, daß durch zu hohen äußeren Druck auf den Deckel dieser Druck auf die empfindliche Informationsplatte übertragen wird.

Sowohl das Halteelement, als auch das weitere Halteelement können beide an der Unterseite des Deckels fest angeformt sein. Bevorzugt wird jedoch eine Ausgestaltung, bei der das weitere Halteelement nicht an dem Deckel, sondern an einer beweglichen Stirnwand der Aufbewahrungskassette angeformt ist. Hierzu wird vorgeschlagen, daß der Deckel über ein doppeltes Gelenk mit dem Basisteil verbunden ist, wobei die beiden parallelen und im Abstand zueinander angeordneten Gelenke sich entlang der beiden Ränder einer beweglichen Stirnwand der Aufbewahrungskassette erstrecken, und daß das weitere Halteelement in Gestalt einer Rippe an der Innenseite der beweglichen Stirnwand angeformt ist. Hiermit wird der Vorteil erzielt, daß mit dem Öffnen des Deckels zugleich auch die Stirnwand verschwenkt, und das dort angeformte weitere Halteelement den Rand der Informationsplatte freigibt.

Das an der Stirnwand in Gestalt einer Rippe angeformte weitere Halteelement kann eine Doppelfunktion übernehmen, wenn sich dieses über die gesamte Länge der Stirnwand erstreckt. Auf diese Weise bewirkt die Rippe zusätzlich eine Versteifung der Stirnwand gegenüber Biegekräften.

Damit die in das Basisteil eingelegte Informationsplatte zwecks Entnahme gut von Hand greifbar ist, wird mit einer bevorzugten Weiterbildung der Aufbewahrungskassette vorgeschlagen, daß sich in Umfangsrichtung zwischen aufeinanderfolgenden Umfangsflächen Unterbrechungen befinden, auf deren Länge der Außenrand der Informationsplatte zwecks Ergreifens der Informationsplatte zwischen Daumen und einem Zeigefinger radial frei zugänglich ist.

Gemäß einer weiteren Ausgestaltung sind die Umfangsflächen Bestandteile eines gegenüber einer rechteckigen Basisfläche des Basisteils erhöhten Kragens, der die Informationsplatte umgibt und an dessen innerem Rand die Umfangsflächen ausgebildet sind, wobei der Kragen durch die Unterbrechungen in einzelne Kreisabschnitte unterteilt ist. Durch die Höhe dieses Kragens kann bestimmt werden, ob in den so gebildeten Aufnahmeraum nur eine einzige Informationsplatte oder eine Mehrzahl von Informationsplatten einlegbar ist.

Desweiteren wird mit der Erfindung vorgeschlagen, an der Basisfläche des Basisteils eine senkrecht auf der Basisfläche stehende, ringförmige Stützrippe anzuformen, auf der die Informationsplatte unter ihrem Eigengewicht aufliegt, und daß der Durchmesser der koaxial zu den Zentriermitteln angeordneten Stützrippe geringer ist als der am weitesten innen liegende Durchmesser der Informationsplatte, auf dem Daten abgespeichert sind.

In einer weiteren Ausgestaltung wird vorgeschlagen, daß das Basisteil mit einer zentral angeordneten Aufsetzhilfe für die Informationsplatte versehen ist, welche die zentrale Öffnung der Informationsplatte axial und ohne Spiel durchragt. Durch die Aufsetzhilfe wird das Wiedereinsetzen der Informationsplatte in das Basisteil erleichtert. Für den Benutzer ist es nicht erforderlich, die Informationsplatte gegenüber den Umfangsflächen zu positionieren, vielmehr kann dies gegenüber der zentral angeordneten Aufsetzhilfe erfolgen, was sich in der Praxis als einfacher erweist.

Die Aufsetzhilfe ist vorzugsweise ein an dem Basisteil angeformter Zapfen, der an seinem über die Oberseite der Informationsplatte hinausragenden Ende eine einstückige, flache Platte aufweist, auf der sich ein in die Aufbewahrungskassette eingelegtes Begleitheft abstützen kann.

Schließlich wird vorgeschlagen, daß in dem von den Umfangsflächen umgebenen Aufnahmeraum mehrere, mit Ihren Flachseiten unmittelbar aufeinanderliegende Informationsplatten aufnehmbar sind.

Die erfindungsgemäße Aufbewahrungskassette wird nachfolgend anhand von zwei Ausführungsbeispielen erläutert, wobei auf die Zeichnungen Bezug genommen wird. Darin zeigen:
- Fig. 1: in einer Schnittdarstellung die erfindungsgemäße Aufbewahrungskassette in teilweise geöffnetem Zustand;
- Fig. 2: die Aufbewahrungskassette in geschlossenem Zustand;
- Fig. 3: einen vergrößerten und zugleich stark verkürzten Schnitt, der im übrigen der Fig. 2 entspricht;
- Fig. 4: eine Draufsicht auf das Basisteil der Aufbewahrungskassette bei geöffneter Aufbewahrungskassette;
- Fig. 5: einen Schnitt in der Ebene V-V der Fig. 4;
- Fig. 6: eine Draufsicht auf die geschlossene Aufbewahrungskassette und
- Fig. 7: in einer Schnittdarstellung, welche der Darstellung in Fig. 2 entspricht, eine zweite Ausführungsform der erfindungsgemäßen Aufbewahrungskassette.

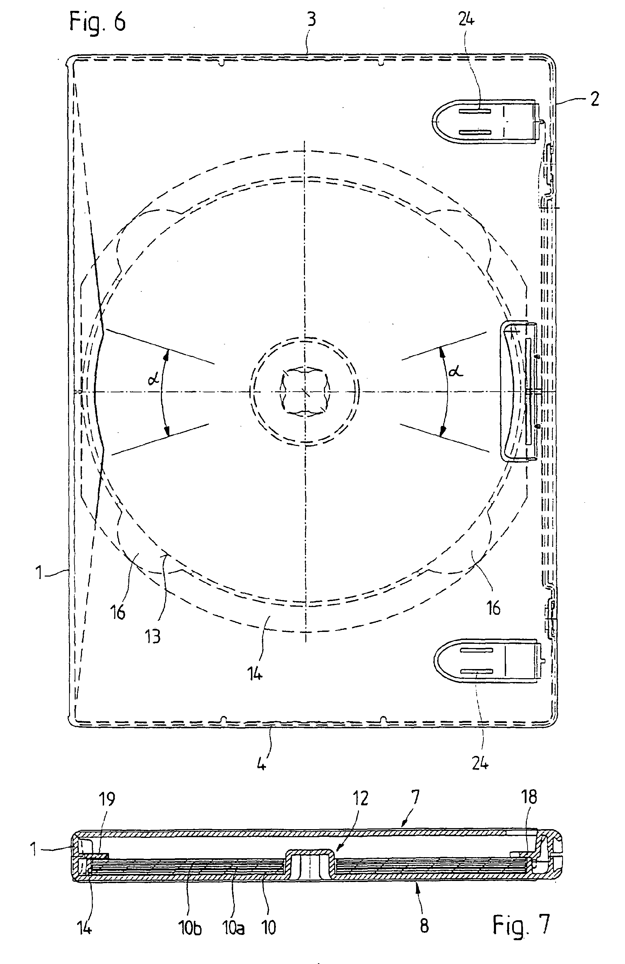

Die Aufbewahrungskassette ist, wie dies insbesondere die Draufsicht Fig. 6 erkennen läßt, eine rechteckige Kunststoffbox mit zwei langen Stirnwänden 1, 2, zwei kurzen Stirnwänden 3, 4, einer oberen rechteckigen Wand 5 und einer unteren rechteckigen Wand 6. Die obere rechteckige Wand 5 bildet die Grundfläche eines Deckels 7, die untere rechteckige Wand 6 bildet die Basisfläche eines Basisteils 8 der Aufbewahrungskassette.

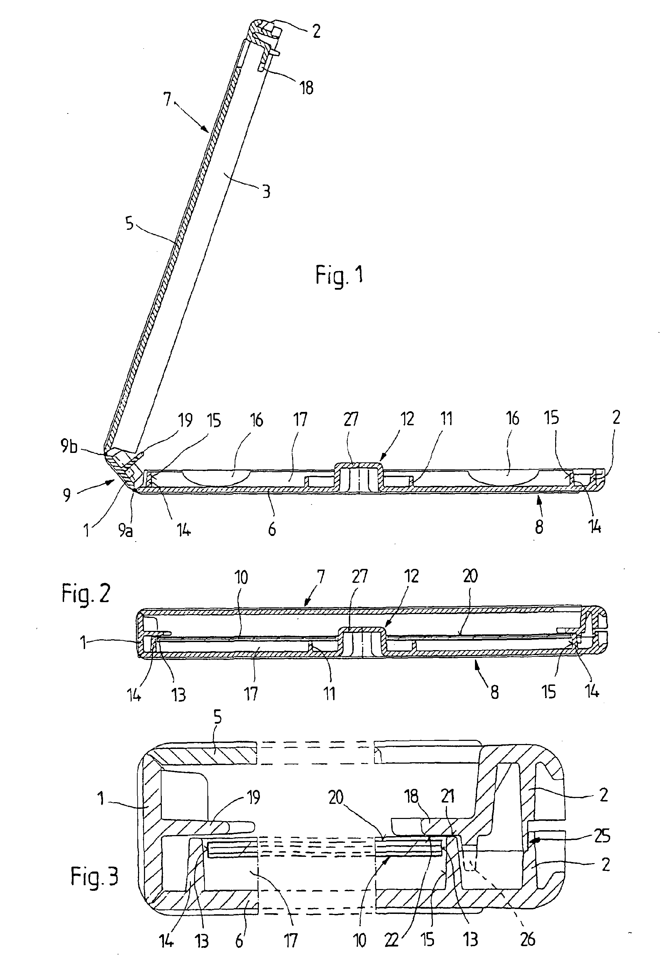

Insbesondere Fig. 1 läßt erkennen, daß Deckel 7 und Basisteil 8 über ein doppeltes Scharnier 9 gelenkig miteinander verbunden sind. Das doppelte Scharnier 9 befindet sich im Bereich der langen Stirnwand 1. Hierzu ist die Stirnwand 1 über ein erstes Gelenk 9a des doppelten Scharniers mit dem Basisteil 8, und über ein zweites Gelenk 9b des doppelten Scharniers mit dem Deckel 7 verbunden. In beiden Fällen handelt es sich um sogenannte Filmscharniere, d. h. einstückig mit Basisteil, Deckel und Stirnwand 1 gespritzte Gelenke. Dies bedeutet zugleich, daß die gesamte Aufbewahrungskassette aus einem einzigen, in einem Spritzvorgang hergestellten Kunststoffteil besteht. Als Werkstoff geeignet ist insbesondere Polypropylen, da bei diesem Material auch ein oftmaliges Biegen der Filmscharniere der Gelenke 9a, 9b zu keiner Materialschwächung führt.

Bei dem auf den Fign. 1 bis 6 dargestellten Ausführungsbeispiel läßt sich in die Aufbewahrungskassette eine Informationsplatte 10, vorzugsweise eine Digital Versatile Disc (DVD) einlegen. In den Fign. 2 und 3, die jeweils die geschlossene Aufbewahrungskassette im Schnitt zeigen, ist die Informationsplatte 10 eingezeichnet.

Sie liegt auf einer Stützrippe 11 auf, die ringförmig eine zentral angeordnete Aufsetzhilfe 12 des Basisteils 8 umgibt. Die Stützrippe 11 kann auch weniger hoch ausgebildet sein, als dies in Fig. 2 dargestellt ist. Auf diese Weise lassen sich dann mehrere Informationsplatten 10, 10a, 10b in das Basisteil einsetzen. Diese Möglichkeit zeigt die Ausführungsform Fig. 7. Die Informationsplatten 10, 10a, 10b liegen dabei mit ihren Flachseiten unmittelbar aufeinander.

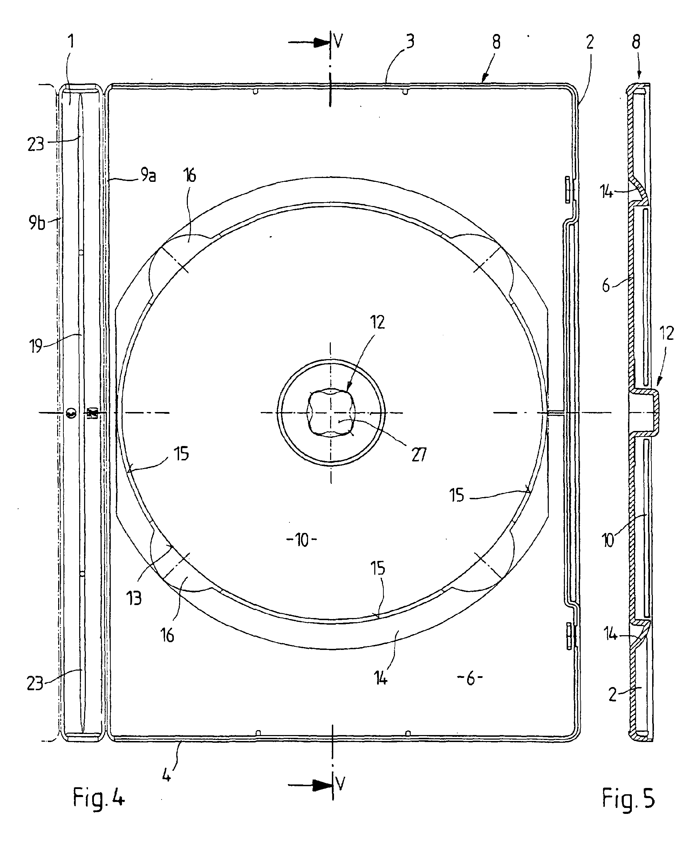

Die Zentrierung der Informationsplatte 10 bzw. der Informationsplatten in dem Basisteil 8 erfolgt in herkömmlicher Weise unter Verwendung des Mittelloches der Informationsplatte. Ein Kragen 14 umgibt die in das Basisteil eingelegte Informationsplatte 10 und ist an seinem inneren Rand mit Umfangsflächen 15 versehen, die dem Außenrand 13 der Informationsplatte mit nur geringem radialen Abstand gegenüberliegen. Wie insbesondere Fig. 4 erkennen läßt, ist die Krümmung der Umfangsflächen 15 im wesentlichen gleich der Kreiskrümmung des Außenrandes 13.

Die Umfangsflächen 15 sind jedoch nicht zu einem geschlossenem Kreis vervollständigt, vielmehr befinden sich zwischen aufeinanderfolgenden Umfangsflächen 15 Unterbrechungen 16, auf deren Länge der Außenrand 13 der Informationsplatte zwecks Ergreifen der Informationsplatte zwischen Daumen und einem Finger radial frei zugänglich ist.

Zusammen begrenzen die Umfangsflächen 15 des Kragens 14 daher einen kurzen, kreiszylindrischen Aufnahmeraum 17 für die Informationsplatte 10. In diesem Aufnahmeraum 17 ist die Informationsplatte nach unten hin durch die Stützrippe 11 fixiert. Diese ist so weit innen angeordnet, daß sie außerhalb jenes Bereiches der Informationsplatte 10 liegt, in dem digitale Informationen abgespeichert sind. Nach oben hin ist die Informationsplatte 10 durch Halteelemente 18, 19 fixiert. Das eine Halteelement 18 ist in Gestalt einer Lasche einstückig an der Wand 5 des Deckels 7 angeformt, und zwar nahe der Stirnwand 2 und damit auf der dem doppelten Scharnier 9 abgewandten Seite der Aufbewahrungskassette. Dort befindet sich das Halteelement 18 exakt in Höhe der Mitte der langen Stirnwand 2. Das Halteelement 18 erstreckt sich parallel zu der Informationsplatte 10 und senkt sich beim Schließen des Deckels 7 bis auf die durch die Oberseite 20 der Informationsplatte 10 definierte Ebene ab, wobei das Halteelement 18 bis über die Informationsplatte ragt. Dies läßt besonders gut die Fig. 3 erkennen. Außerdem stützt sich bei geschlossenem Deckel das Halteelement 18 auf der oberen Kante 21 des Kragens 14 ab, wodurch die Unterseite 22 des Halteelemtes 18 zusammen mit der Umfangsfläche 15 eine rechtwinklige Ecke bildet. In dieser Ecke ist der Außenrand 13 der Informationsplatte mit geringem Spiel untergebracht.

Eine ähnliche Ecke ergibt sich auch gegenüberliegend, d. h. im Bereich der langen Stirnwand 1. Dort befindet sich das weitere Halteelement 19, welches bei geschlossener Kassette eine vergleichbare Lage einnimmt wie das Halteelement 18, jedoch nicht an dem Deckel 7 angeformt ist, sondern an der Stirnwand 1, an der sich auch die beiden Gelenke 9a, 9b befinden. Dies führt dazu, daß sich das weitere Halteelement 19 zusammen mit der den Deckel mit dem Basisteil verbindenden Stirnwand 1 verschwenken läßt. Auch das weitere Halteelement 19 ragt im Randbereich bis über die Informationsplatt 10, und sichert diese daher in geschlossenem Zustand der Kassette gegen ein Abheben.

Es reicht aus, wenn Halteelement 18 und weiteres Halteelement 19 relativ kurz gestaltet sind. In Fig. 6 ist hierzu dargestellt, daß sich beide Halteelemente 18, 19 jeweils nur über einen Winkelbereich α über den Rand der Informationsplatte 10 erstrecken.

Das weitere Halteelement 19 ist zu einer Stützrippe 23 verlängert, die nahezu dieselbe Länge wie die Stirnwand 1 aufweist. Auf diese Weise trägt das weitere Halteelement 19 zusätzlich zur Versteifung der beweglichen Stirnwand 1 bei.

Aus der Wand 5 des Deckels 7 kragen nach unten Laschen 24 hervor, zwischen denen und der Innenseite der Wand 5 sich ein Informationsheft einlegen läßt. Der Verschluß 25 der Kassette erfolgt an der Stirnwand 2, die zu diesem Zweck zweigeteilt zwischen Deckel 7 und Basisteil 8 ist. An dem Halteelement 18 ist unten eine Verstärkungsrippe 26 angeformt, die sich von außen an den Kragen 14 legen kann. Hierdurch wird erreicht, daß die Stirnwand 2 bei starkem äußeren Druck nicht zu weit nach innen nachgibt.

Die zentral an dem Basisteil 8 angeformte Aufsetzhilfe 12 ist ein Zapfen, der die Informationsplatte 10 im Aufnahmeraum 17 zentriert und ferner dazu dient, bei geöffneter Kassette das zentrische Einlegen der Informationsplatte zu erleichtern. Hierzu ragt die Aufsetzhilfe mit ihrem Ende über die Oberseite 20 der Informationsplatte 10 hinaus. Dort ist die Aufsetzhilfe 12 mit einer einstückigen, flachen Platte 27 versehen, auf der sich das unter den Laschen 24 eingeklemmte Begleitheft abstützen kann.

Fig. 5 läßt erkennen, daß der Zapfen 12 mit vier leicht einfedernden Rippen versehen ist. Diese liegen an dem Innenrand der Compact Disc unter leichter Reibung an, ohne dort zu einer größeren Druckbelastung zu führen. Erreicht wird so eine schonende Zentrierung ohne Druckspitzen.

### Bezugszeichenliste

- 1: lange Stirnwand
- 2: lange Stirnwand
- 3: kurze Stirnwand
- 4: kurze Stirnwand
- 5: obere Wand
- 6: untere Wand, Basisfläche
- 7: Deckel
- 8: Basisteil
- 9: doppeltes Scharnier
- 9a: Gelenk
- 9b: Gelenk
- 10: Informationsplatte (DVD)
- 10a: Informationsplatte (DVD)
- 10b: Informationsplatte (DVD)
- 11: Stützrippe
- 12: Aufsetzhilfe, Zapfen
- 13: Außenrand der Informationsplatte
- 14: Kragen
- 15: Umfangsflächen
- 16: Unterbrechung
- 17: Aufnahmeraum
- 18: Halteelement
- 19: weiteres Halteelement
- 20: Oberseite
- 21: Kante
- 22: Unterseite
- 23: Rippe
- 24: Lasche
- 25: Verschluß
- 26: Verstärkungsrippe
- 27: Platte

- α: Winkelbereich

## Patentansprüche

1. Aufbewahrungskassette für mindestens eine, digitale Information speichernde Informationsplatte, insbesondere Compact Disc (CD) oder Digital Versatile Disc (DVD), bestehend aus einem die mit einer zentralen Öffnung versehene Informationsplatte aufnehmenden und hierzu mit Zentriermitteln versehenen Basisteil (8) sowie einem bei geschlossener Aufbewahrungskassette das Basisteil (8) sowie einem bei geschlossener Aufbewahrungskassette das Basisteil (8) einschließlich der darin aufgenommenen Informationsplatte (10) verschließenden Deckel (7), der über ein Scharnier (9) gelenkig mit dem Basisteil (8) verbunden ist,
**dadurch gekennzeichnet,**
**daß** der Deckel (7) an der dem Scharnier (9) abgewandten Seite mit mindestens einem sich parallel zu der Informationsplatte (10) erstreckenden Halteelement (18) versehen ist, welches sich durch Schließen des Deckels (7) bis in die durch die Oberseite (20) der Informationsplatte (10) definierte Ebene absenkt und hierbei vom Außenrand (13) der Informationsplatte (10) her bis über die Informationsplatte (10) ragt.

2. Aufbewahrungskassette nach Anspruch 1, **gekennzeichnet durch** ein dem Halteelement (18) in Bezug auf die Mittelachse der Informationsplatte gegenüberliegendes weiteres Halteelement (19), welches sich **durch** Schließen des Deckels (7) ebenfalls bis in die **durch** die Oberseite (20) der Informationsplatte (10) definierte Ebene absenkt und hierbei bis über die Informationsplatte (10) ragt.

3. Aufbewahrungskassette nach Anspruch 1 oder Anspruch 2, **dadurch gekennzeichnet, daß** das Halteelement (18) bzw. das weitere Halteelement (19) ausschließlich im Randbereich der Informationsplatte auf dieser aufliegt.

4. Aufbewahrungskassette nach einem der Ansprüche 1 bis 3, **dadurch gekennzeichnet, daß** das Halteelement (18) bzw. das weitere Halteelement (19) nur über einen Kreisabschnitt des Randes der Informationsplatte ragt.

5. Aufbewahrungskassette nach einem der Ansprüche 1 bis 4, **gekennzeichnet durch** um den Außenrand (13) der Informationsplatte (10) herum angeordnete Umfangsflächen (15), die dem Außenrand (13) der Informationsplatte (10) mit geringem Abstand radial gegenüberliegen, und deren Krümmung im wesentlichen gleich der Kreiskrümmung des Außenrandes (13) ist, wobei sich das Halteelement (18) bzw. das weitere Halteelement (19) in abgesenktem Zustand auf der oberen Kante (21) zumindest einer dieser Umfangsflächen (15) des Basisteils (8) abstützt, und die Unterseite (22) des Halteelements (18 bzw. 19) zusammen mit der Umfangsfläche (15) eine rechtwinklige Ecke bildet.

6. Aufbewahrungskassette nach einem der Ansprüche 1 bis 5, **dadurch gekennzeichnet, daß** das Halteelement (18) einstückig und starr an dem Deckel (7) angeformt ist.

7. Aufbewahrungskassette nach einem der Ansprüche 2 bis 6, **dadurch gekennzeichnet, daß** der Deckel (7) über ein doppeltes Gelenk (9a, 9b) mit dem Basisteil (8) verbunden ist, wobei die beiden parallel und im Abstand zueinander angeordneten Gelenke (9a, 9b) sich entlang der beiden Ränder einer beweglichen Stirnwand (1) der Aufbewahrungskassette erstrecken, und daß das weitere Halteelement (19) in Gestalt einer Rippe (23) an der Innenseite der beweglichen Stirnwand (1) angeformt ist.

8. Aufbewahrungskassette nach Anspruch 7, **dadurch gekennzeichnet, daß** sich die Rippe (23) über die gesamte Länge der Stirnwand (1) erstreckt und diese versteift.

9. Aufbewahrungskassette nach einem der Ansprüche 5 bis 8, **dadurch gekennzeichnet, daß** sich in Umfangsrichtung zwischen aufeinanderfolgenden Umfangsflächen (15) Unterbrechungen (16) befinden, auf deren Länge der Außenrand (13) der Informationsplatte (10) zwecks Ergreifens der Informationsplatte zwischen Daumen und einem Finger radial frei zugänglich ist.

10. Aufbewahrungskassette nach Anspruch 9, **dadurch gekennzeichnet, daß** die Umfangsflächen (15) Bestandteile eines gegenüber einer rechteckigen Basisfläche (6) des Basisteils (8) erhöhten Kragen (14) sind, der die Informationsplatte (10) umgibt und an dessen innerem Rand die Umfangsflächen (15) ausgebildet sind, wobei der Kragen (14) durch die Unterbrechungen (16) in einzelne Kreisabschnitte unterteilt ist.

11. Aufbewahrungskassette nach einem der vorangehenden Ansprüche, **dadurch gekennzeichnet, daß** an der Basisfläche (6) des Basisteils (8) eine senkrecht auf der Basisfläche (6) stehende, ringförmige Stützrippe (11) angeformt ist, auf der die Informationsplatte (10) unter ihrem Eigengewicht aufliegt, und daß der Durchmesser der koaxial zu den Zentriermitteln angeordneten Stützrippe (11) geringer ist als der am weitesten innen liegende Durchmesser der Informationsplatte, auf dem Daten abgespeichert sind.

12. Aufbewahrungskassette nach einem der vorangehenden Ansprüche, **dadurch gekennzeichnet, daß** das Basisteil (8) mit einer zentral angeordneten Aufsetzhilfe (12) für die Informationsplatte (10) versehen ist, welche die zentrale Öffnung der Informationsplatte axial und ohne Spiel durchragt.

13. Aufbewahrungskassette nach Anspruch 12, **dadurch gekennzeichnet, daß** die Aufsetzhilfe (12) ein an dem Basisteil (8) angeformter Zapfen ist, der an seinem über die Oberseite (20) der Informationsplatte hinausragenden Ende eine einstückige, flache Platte (27) aufweist, auf der sich ein in die Aufbewahrungskassette eingelegtes Begleitheft abstützen kann.

14. Aufbewahrungskassette nach einem der vorangehenden Ansprüche, **dadurch gekennzeichnet, daß** in dem von den äußeren Umfangsflächen (15) umgebenen Aufnahmeraum (17) mehrere, mit ihren Flachseiten unmittelbar aufeinanderliegende Informationsplatten (10, 10a, 10b) aufnehmbar sind.

## Claims

1. Storage box for at least one information disc that stores digital information, in particular a compact disc (CD) or digital versatile disc (DVD), consisting of a base part (8) which holds the information disc, said information disc being provided with a central opening, and which has centring means for this purpose, and a cover (7) which closes the base part (8) when the storage box is closed and which closes the base part (8) including the information disc (10) held therein when the storage box is closed, said cover being connected in an articulated manner to the base part (8) via a hinge (9), **characterised in that** the cover (7), on the side remote from the hinge (9), is provided with at least one retaining element (18) which extends parallel to the information disc (10) and which, by closing the cover (7), is lowered until it reaches the plane defined by the upper side (20) of the information disc (10) and protrudes over the information disc (10) from the outer edge (13) of the information disc (10).

2. Storage box according to Claim 1, **characterised by** a further retaining element (19) which lies opposite the retaining element (18) with respect to the centre axis of the information disc and which, by closing the cover (7), is also lowered until it reaches the plane defined by the upper side (20) of the information disc (10) and protrudes over the information disc (10).

3. Storage box according to Claim 1 or Claim 2, **characterised in that** the retaining element (18) or the further retaining element (19) bears against the information disc exclusively in the edge region thereof.

4. Storage box according to one of Claims 1 to 3, **characterised in that** the retaining element (18) or the further retaining element (19) protrudes only over a circular segment of the edge of the information disc.

5. Storage box according to one of Claims 1 to 4, **characterised by** peripheral faces (15) arranged around the outer edge (13) of the information disc (10), which peripheral faces lie radially opposite the outer edge (13) of the information disc (10) at a small distance therefrom and have a curvature which is essentially the same as the circular curvature of the outer edge (13), wherein the retaining element (18) or the further retaining element (19) in the lowered state is supported on the upper edge (21) of at least one of these peripheral faces (15) of the base part (8), and the underside (22) of the retaining element (18 or 19) forms a right-angled corner with the peripheral face (15).

6. Storage box according to one of Claims 1 to 5, **characterised in that** the retaining element (18) is integrally formed in one piece with and fixedly on the cover (7).

7. Storage box according to one of Claims 2 to 6, **characterised in that** the cover (7) is connected to the base part (8) via a double articulation (9a, 9b), wherein the two articulations (9a, 9b), which are arranged parallel to and at a distance from one another, extend along the two edges of a movable end wall (1) of the storage box, and **in that** the further retaining element (19) is integrally formed as a rib (23) on the inner side of the movable end wall (1).

8. Storage box according to Claim 7, **characterised in that** the rib (23) extends over the entire length of the end wall (1) and stiffens the latter.

9. Storage box according to one of Claims 5 to 8, **characterised in that** there are interruptions (16) in the circumferential direction between successive peripheral faces (15), over the length of which interruptions the outer edge (13) of the information disc (10) is freely accessible in the radial direction so that the information disc can be gripped between a thumb and a finger.

10. Storage box according to Claim 9, **characterised in that** the peripheral faces (15) form part of a collar (14) which is raised with respect to a rectangular base surface (6) of the base part (8) and surrounds the information disc (10), the peripheral faces (15) being formed on the inner edge of said collar, wherein the collar (14) is divided by the interruptions (16) into individual circular segments.

11. Storage box according to one of the preceding claims, **characterised in that** an annular supporting rib (11) which is perpendicular to the base surface (6) is integrally formed on the base surface (6) of the base part (8), against which supporting rib the information disc (10) bears under its own weight, and **in that** the diameter of the supporting rib (11), which is arranged coaxially with respect to the centring means, is smaller than the innermost diameter of the information disc at which data are stored.

12. Storage box according to one of the preceding claims, **characterised in that** the base part (8) is provided with a central insertion aid (12) for the information disc (10), which protrudes through the central opening in the information disc in the axial direction and without any play.

13. Storage box according to Claim 12, **characterised in that** the insertion aid (12) is a pin which is integrally formed on the base part (8) and which has an integral flat piece (27) on its end which protrudes out beyond the upper side (20) of the information disc, on which flat piece an accompanying booklet that is placed in the storage box can be supported.

14. Storage box according to one of the preceding claims, **characterised in that** a plurality of information discs (10, 10a, 10b) bearing directly against one another with their flat sides can be received in the receiving space (17) surrounded by the outer peripheral faces (15).

## Revendications

1. Boîtier de stockage pour au moins un disque de support de données contenant des informations numériques, en particulier un disque compact (CD) ou un disque numérique polyvalent (DVD), constitué d'une partie de base (8), qui reçoit le disque de support de données muni d'une ouverture centrale et qui comporte des moyens de centrage à cet effet, ainsi que d'un couvercle (7) qui, lorsque le boîtier de stockage est fermé, ferme la partie de base (8), y compris le disque de support de données (10) logé dans celle-ci, et qui est assemblé de manière articulée à la partie de base (8) par l'intermédiaire d'une charnière (9),
**caractérisé en ce que** le couvercle (7), sur le côté opposé à la charnière (9), est muni d'au moins un élément de retenue (18) qui s'étend parallèlement au disque de support de données (10) et qui, sous l'effet de la fermeture du couvercle (7), descend jusque dans le plan défini par la face supérieure (20) du disque de support de support de données (10) et, dans ce cas, s'avance depuis le bord extérieur (13) du disque de support de données (10) jusqu'au-dessus du disque de données (10).

2. Boîtier de stockage selon la revendication 1, **caractérisé par** un élément de retenue (19) supplémentaire, qui est disposé et l'opposé de l'élément de retenue (18) par rapport à l'axe médian du disque de support de données et qui, sous l'effet de la fermeture du couvercle (7), descend également jusque dans le plan défini par la face supérieure (20) du disque de support de données (10) et, dans ce cas, s'avance jusqu'au-dessus du disque de support de données (10).

3. Boîtier de stockage selon la revendication 1 ou 2, **caractérisé en ce que** l'élément de retenue (18) et/ou l'élément de retenue (19) supplémentaire sont en appui sur le disque de données exclusivement dans la zone de bordure de celui-ci.

4. Boîtier de stockage selon l'une des revendications 1 à 3, **caractérisé en ce que** l'élément de retenue (18) et l'élément de retenue (19) supplémentaire ne s'avancent que sur un segment de cercle du bord du disque de support de données.

5. Boîtier de stockage selon l'une des revendications 1 à 4, **caractérisé par** des faces périphériques (15) disposées autour du bord extérieur (13) du disque de support de données (10), lesquelles sont situées à faible distance dans le sens radial en face du bord extérieur (13) du disque de support de données (10) et dont la courbure est sensiblement identique à la courbure circulaire du bord extérieur (13), l'élément de retenue (18) et/ou l'élément de retenue (19) supplémentaire, dans leur position abaissée, étant en appui sur le bord supérieur (21) d'au moins l'une de ces faces périphériques (15) de la partie de base (8), et la face inférieure (22) de l'élément de retenue (18 et/ou 19) formant conjointement avec la face périphérique (15) un angle droit.

6. Boîtier de stockage selon l'une des revendications 1 à 5, **caractérisé en ce que** l'élément de retenue (18) est formé d'un seul tenant et de manière rigide sur le couvercle (7).

7. Boîtier de stockage selon l'une des revendications 2 à 6, **caractérisé en ce que** le couvercle (7) est assemblé à la partie de base (8) par l'intermédiaire d'une double articulation (9a, 9b), les deux articulations (9a, 9b), disposées parallèlement et à distance l'une de l'autre, s'étendant le long des deux bords d'une face frontale (1) mobile du boîtier de stockage, et **en ce que** l'élément de retenue (19) supplémentaire, sous la forme d'une nervure (23), est formé sur la face intérieure de la paroi frontale (1) mobile.

8. Boîtier de stockage selon la revendication 7, **caractérisé en ce que** la nervure (23) s'étend sur toute la longueur de la paroi frontale (1) et rigidifie celle-ci.

9. Boîtier de stockage selon l'une des revendications 5 à 8, **caractérisé en ce que** des évidements (16) sont situés dans le sens périphérique entre des faces périphériques (15) successives, sur la longueur desquels le bord extérieur (13) du disque de support de données (10) est librement accessible dans le sens radial en vue de saisir le disque de support de données entre le pouce et un doigt.

10. Boîtier de stockage selon la revendication 9, **caractérisé en ce que** les faces périphériques (15) sont des parties intégrantes d'une collerette (14), qui est surélevée par rapport à une surface de base (6) rectangulaire de la partie de base (8) et qui entoure le disque de support de données (10) et sur le bord intérieur de laquelle sont formées les faces périphériques (15), la collerette (14) étant divisée par les évidements (16) en segments de cercle séparés.

11. Boîtier de stockage selon l'une des revendications précédentes, **caractérisé en ce que** sur la surface de base (6) de la partie de base (8) est formée une nervure de support (11) annulaire et perpendiculaire à la surface de base (6), sur laquelle le disque de support de données (10)prend appui sous l'effet de son propre poids, et **en ce que** le diamètre de la nervure de support (11), disposée coaxialement aux moyens de centrage, est plus petit que le diamètre le plus intérieur du disque de support de données, sur lequel sont stockées des données.

12. Boîtier de stockage selon l'une des revendications précédentes, **caractérisé en ce que** la partie de base (8) est munie d'un support central (12) pour le disque de support de données (10), lequel traverse axialement et sans jeu l'ouverture centrale du disque de support de données.

13. Boîtier de stockage selon la revendication 12, **caractérisé en ce que** le support (12) est un téton, qui est formé sur la partie de base (8) et dont l'extrémité en saillie sur la face supérieure (20) du disque de support de données porte une plaquette (27) plate d'un seul tenant, sur laquelle peut venir en appui un livret, joint dans le boîtier de stockage.

14. Boîtier de stockage selon l'une des revendications précédentes, **caractérisé en ce que** plusieurs disques de support de données (10, 10a, 10b), directement superposés par leurs faces planes, peuvent être logés dans l'espace de stockage (17) entouré par les faces périphériques (15) extérieures.
